# EUROPÄISCHE PATENTSCHRIFT

(11) **EP 3 651 059 B1**
(45) Veröffentlichungstag und Bekanntmachung des Hinweises auf die Patenterteilung: **10.12.2025**
(21) Anmeldenummer: 19203137.5
(22) Anmeldetag: 15.10.2019
(51) Int. Cl.: G06V 40/16, G06V 40/40

(54) **VORRICHTUNG ZUM PERSONALISIEREN EINES IDENTITÄTSDOKUMENTES EINER PERSON**
DEVICE FOR PERSONALIZING AN IDENTITY DOCUMENT OF A PERSON
DISPOSITIF DE PERSONNALISATION D'UN DOCUMENT D'IDENTITÉ D'UNE PERSONNE

(30) Priorität: 09.11.2018 DE 102018128133
(43) Veröffentlichungstag der Anmeldung: 13.05.2020
(73) Patentinhaber: Bundesdruckerei GmbH, 10969 Berlin (DE); Otto-von-Guericke-Universität Magdeburg, 39106 Magdeburg (DE); Fraunhofer-Gesellschaft zur Förderung der angewandten Forschung e.V., 80686 München (DE)
(72) Erfinder: WOLF, Andreas, 13158 Berlin (DE); RABELER, Uwe, 30453 Hannover (DE); DITTMANN, Jana, 06846 Dessau (DE); KRAETZER, Christian, 04416 Markkleeberg (DE); EISERT, Peter, 14169 Berlin (DE); SEIBOLD, Clemens, 10559 Berlin (DE)
(74) Vertreter: Patentship Patentanwaltsgesellschaft mbH

(56) Entgegenhaltungen:
- ANONYMOUS: "Technische Richtlinie zur Produktionsdatenerfassung, -qualit�tspr�fung und -�bermittlung f�r P�sse", 2010, XP055676218, Retrieved from the Internet <URL:https://www.bsi.bund.de/SharedDocs/Downloads/DE/BSI/Publikationen/TechnischeRichtlinien/TR03104/BSI_TR_03104_A1_V2_1_5.pdf;jsessionid=68F0241576AA1E810DB8C9097105B9D7.1_cid341?__blob=publicationFile&v=1> [retrieved on 20200312]
- ANONYMOUS: "Technische Richtlinie 03146 Elektronische Bild�bermittlung zur Beantragung hoheitlicher Dokumente (E-Bild hD)", 1 October 2014 (2014-10-01), XP055676232, Retrieved from the Internet <URL:https://www.bsi.bund.de/SharedDocs/Downloads/DE/BSI/Publikationen/TechnischeRichtlinien/TR03146/TR03146.pdf?__blob=publicationFile&v=1> [retrieved on 20200312]
- SEIBOLD CLEMENS ET AL: "Detection of Face Morphing Attacks by Deep Learning", 26 July 2017, INTERNATIONAL CONFERENCE ON FINANCIAL CRYPTOGRAPHY AND DATA SECURITY; [LECTURE NOTES IN COMPUTER SCIENCE; LECT.NOTES COMPUTER], SPRINGER, BERLIN, HEIDELBERG, PAGE(S) 107 - 120, ISBN: 978-3-642-17318-9, XP047422940
- MALLICK STAYA: "Face Morph Using OpenCV - C++ / Python | Learn OpenCV", 11 March 2016 (2016-03-11), pages 1 - 18, XP055857746, Retrieved from the Internet <URL:https://web.archive.org/web/20170817011709/https://learnopencv.com/face-morph-using-opencv-cpp-python/> [retrieved on 20211103]
- ANONYMOUS: "Probabilistic classification", 31 July 2017 (2017-07-31), pages 1 - 3, XP055857747, Retrieved from the Internet <URL:https://en.wikipedia.org/w/index.php?title=Probabilistic_classification&oldid=793272831> [retrieved on 20211103]
- ANONYMOUS: "Statistical classification", 27 June 2017 (2017-06-27), pages 1 - 6, XP055857748, Retrieved from the Internet <URL:https://en.wikipedia.org/w/index.php?title=Statistical_classification&oldid=787810929> [retrieved on 20211103]
- SCHERHAG ULRICH ET AL: "Towards Detection of Morphed Face Images in Electronic Travel Documents", 2018 13TH IAPR INTERNATIONAL WORKSHOP ON DOCUMENT ANALYSIS SYSTEMS (DAS), IEEE, 24 April 2018 (2018-04-24), pages 187 - 192, XP033364364, [retrieved on 20180622], DOI: 10.1109/DAS.2018.11

## Beschreibung

### TECHNISCHES GEBIET

Die vorliegende Erfindung betrifft das Gebiet der Prüfung eines Referenzgesichtsbildes einer Person, welches in einem Identitätsdokument der Person gespeichert werden soll.

### TECHNISCHER HINTERGRUND

Die Druckschrift "Anonymous: "Technische Richtlinie zur Produktionsdatenerfassung, - qualitätsprüfung und -übermittlung für Pässe", 2010 (2010-01-01), XP055676218, Gefunden im Internet: URL:https://www.bsi.bund.de/SharedDocs/Downloads/DE/BSI/Publikationen/TechnischeRich tlinien/TR03104/BSI-TR_031_04_A1_V2_1_5.pdf;jsessionid=68F0241576AA1E810DB8C909 7105B9D7.1_cid341?_blob=publicationFile&v=1 [gefunden am 2020-03-12]" ist eine technische Richtlinie zur Produktionsdatenerfassung, -qualitätsprüfung und -übermittlung für Pässe.

Die Druckschrift "Anonymous: "Technische Richtlinie 03146 Elektronische Bildübermittlung zur Beantragung hoheitlicher Dokumente (E-Bild hD)", 1. Oktober 2014 (2014-10-01), XP055676232, Gefunden im Internet: URL:https://www.bsi.bund.de/SharedDocs/Downloads/DE/BSI/Publikationen/TechnischeRich tlinien/TR03146/TR03146.pdf?_blob=publicationFile&v=1 [gefunden am 2020-03-12]" ist eine technische Richtlinie bezüglich elektronischer Bildübermittlung zur Beantragung hoheitlicher Dokumente.

Die Druckschrift "SCHERHAG ULRICH ET AL: "Towards Detection of Morphed Face Images in Electronic Travel Documents", 2018 13TH IAPR INTERNATIONAL WORKSHOP ON DOCUMENT ANALYSIS SYSTEMS (DAS), IEEE, 24. April 2018 (2018-04-24), Seiten 187-192, DOI: 10.1109/ DAS.2018.11, [gefunden am 2018-06-22]", offenbart ein Verfahren in dem Face Morphing Angriffe im Rahmen der Nutzung eines Ausweisdokumentes erkannt werden.

Bei der Prüfung einer Identität einer Person erfolgt typischerweise ein Vergleich eines Referenzgesichtsbildes der Person, welches auf einem Identitätsdokument der Person aufgebracht oder digital in dem Identitätsdokument gespeichert ist, mit einem Gesicht bzw. Gesichtsbild der Person.

Neuere Studien deuten darauf hin, dass es einfach möglich sein kann, aus digitalen Referenzgesichtsbildern annähernd ähnlich aussehender Personen ein gemeinsames digitales Referenzgesichtsbild mittels einer Bildmanipulation zu erzeugen, welches sowohl bei manueller Inspektion durch Grenzkontrollbeamte oder forensische Experten als auch bei automatischer Inspektion durch Zutrittskontrollsysteme zu allen Personen passen kann. Eine derartige Bildmanipulation kann beispielsweise ein Morphing umfassen, bei welchem ein Zwischenübergang zwischen mehreren digitalen Referenzgesichtsbildern berechnet wird. Damit ist es beispielsweise möglich, ein Identitätsdokument zu beantragen, welches von mehreren Personen benutzt werden kann, da das gemeinsame digitale Referenzgesichtsbild auf all diese Personen biometrisch passt. Dadurch ergeben sich Herausforderungen insbesondere für die Zuverlässigkeit automatisierter Zutrittskontrollsysteme.

Ein klassischer Ansatz zur Lösung dieses Problems besteht darin, bei der Beantragung des Identitätsdokumentes technisch oder organisatorisch auszuschließen, dass manipulierte digitale Referenzgesichtsbilder akzeptiert und in ein Identifikationsdokument eingebracht werden. Im Falle von Reisepässen als Identitätsdokumenten ließe sich dieser Ansatz beispielsweise jedoch nur dann realisieren, wenn alle ausstellenden Länder bzw. Behörden weltweit derart vorgehen würden. Dies ist jedoch in der Praxis schwierig sicherzustellen. Eine durch einen Hersteller an eine Datengruppe angebrachte elektronische Signatur enthält typischerweise ebenfalls keinen Hinweis darauf, wie das digitale Referenzgesichtsbild ursprünglich erzeugt bzw. ob dieses nachträglich manipuliert wurde.

Die vorgenannten Herausforderungen betreffen dabei sowohl Länder bzw. Behörden, bei welchen Referenzgesichtsbilder von Antragstellern in Form ausgedruckter Passfotos beigebracht und anschließend eingescannt werden, als auch Länder bzw. Behörden, bei welchen Antragsteller beim Fotograph sowohl ausgedruckte Passfotos als auch Verweise bzw. Links auf digital gespeicherte Bilder erhalten, welche anschließend von Servern abgerufen werden können.

### BESCHREIBUNG DER ERFINDUNG

Es ist eine Aufgabe der vorliegenden Erfindung, ein effizientes Konzept zum Personalisieren eines Identitätsdokumentes einer Person zu schaffen.

Diese Aufgabe wird durch die Merkmale der unabhängigen Ansprüche gelöst und somit durch die angehängten unabhängigen Ansprüche definiert. Vorteilhafte Ausführungsformen der Erfindung sind Gegenstand der Beschreibung, der Zeichnungen sowie der abhängigen Ansprüche.

Die vorliegende Erfindung basiert auf der Erkenntnis und schließt diese mit ein, dass die obige Aufgabe durch eine Erfassung eines qualitativ hochwertigen digitalen Referenzgesichtsbildes der Person gelöst werden kann, in welchem ein biometrisches Referenzmerkmal erfasst wird. Das biometrische Referenzmerkmal wird anschließend mit einem biometrischen Vergleichsreferenzmerkmal verglichen, um einen Manipulationsindikator zu erhalten, welcher einen Grad einer Bildmanipulation in dem digitalen Referenzgesichtsbild repräsentiert. Der Manipulationsindikator kann beispielsweise eine Konfidenz bzw. eine Wahrscheinlichkeit für das Vorliegen der Bildmanipulation repräsentieren. Falls keine Bildmanipulation erkannt wird, kann das digitale Referenzgesichtsbild der Person für das Identitätsdokument geeignet angepasst werden, beispielsweise in ein digitales Referenzgesichtsbild mit einer geringeren Referenzbildauflösung konvertiert werden. Anschließend kann das digitale Referenzgesichtsbild in dem Identitätsdokument gespeichert werden. Das konvertierte digitale Referenzgesichtsbild kann eine Referenzbildauflösung gemäß etablierter Standards, beispielsweise der ICAO, aufweisen.

Zudem können weitere Ansätze zur Bestimmung weiterer Manipulationsindikatoren zum Einsatz kommen, wobei der Manipulationsindikator und die weiteren Manipulationsindikatoren gemeinsam zum Erkennen der Bildmanipulation ausgewertet werden können. Die gemeinsame Auswertung kann beispielsweise mittels eines statistischen Ansatzes oder mittels eines neuronalen Netzes erfolgen.

Dadurch, dass die Erkennung der Bildmanipulation unter Verwendung des qualitativ hochwertigen digitalen Referenzgesichtsbildes durchgeführt wird, kann die Effizienz und Zuverlässigkeit der Manipulationserkennung wesentlich gesteigert werden. Ferner können die Sicherheit und die Zuverlässigkeit von Zugangskontrollsystemen, welche Identitätsdokumente verwenden, erhöht werden. Durch die erhöhte Effizienz und Zuverlässigkeit der Manipulationserkennung kann ferner erwartet werden, dass manipulierte Referenzgesichtsbilder in geringerem Maße von Personen eingereicht werden.

Gemäß einem ersten Aspekt betrifft die Erfindung eine Vorrichtung zum Personalisieren eines Identitätsdokumentes einer Person. Die Vorrichtung umfasst eine Bilderfassungseinrichtung, welche ausgebildet ist, ein erstes digitales Referenzgesichtsbild der Person zu erfassen, wobei das erste digitale Referenzgesichtsbild der Person eine erste Referenzbildauflösung aufweist. Die Vorrichtung umfasst ferner eine Manipulationserkennungseinrichtung, welche ausgebildet ist, ein biometrisches Referenzmerkmal in dem ersten digitalen Referenzgesichtsbild der Person zu erfassen, das biometrische Referenzmerkmal mit einem biometrischen Vergleichsreferenzmerkmal zu vergleichen, um einen Manipulationsindikator zu erhalten, und eine Bildmanipulation in dem ersten digitalen Referenzgesichtsbild auf der Basis des Manipulationsindikators zu erkennen. Die Vorrichtung umfasst ferner eine Bilderzeugungseinrichtung, welche ausgebildet ist, falls keine Bildmanipulation in dem ersten digitalen Referenzgesichtsbild erkannt wird, ein zweites digitales Referenzgesichtsbild der Person auf der Basis des ersten digitalen Referenzgesichtsbildes der Person zu erzeugen, wobei das zweite digitale Referenzgesichtsbild der Person eine zweite Referenzbildauflösung aufweist. Die Vorrichtung umfasst ferner eine Personalisierungseinrichtung, welche ausgebildet ist, das zweite digitale Referenzgesichtsbild der Person in dem Identitätsdokument der Person zu speichern, um das Identitätsdokument der Person zu personalisieren.

Die Bildmanipulation kann beispielsweise ein Morphing umfassen, bei welchem ein Zwischenübergang zwischen unterschiedlichen digitalen Referenzgesichtsbildern berechnet wird. Das Morphing kann beispielsweise ein Warping, ein Tweening, und/oder ein Cross-Dissolving umfassen. Die Bildmanipulation kann aber auch jede andere Form von Bildmanipulation, beispielsweise eine geometrische Bildverzerrung oder eine Texturveränderung, umfassen.

Das Identitätsdokument kann beispielsweise ein Reisepass, ein Personalausweis, ein Visum, ein Zugangskontrollausweis, ein Berechtigungsausweis, ein Unternehmensausweis, ein Steuerzeichen, ein Ticket, eine Geburtsurkunde, ein Führerschein, ein Kraftfahrzeugausweis, ein Zahlungsmittel, eine Bankkarte, oder eine Kreditkarte sein. Das Identitätsdokument kann beispielsweise ein maschinenlesbares Reisedokument (Machine Readable Travel Document, MRTD) oder ein elektronisch maschinenlesbares Reisedokument (Electronic Machine Readable Travel Document, eMRTD) sein. Das Identitätsdokument kann einen elektronischen Speicher umfassen, in welchem das zweite digitale Referenzgesichtsbild gespeichert werden soll. Das zweite digitale Referenzgesichtsbild kann einer vorbestimmten Datengruppe, beispielsweise einer Datengruppe 2 (DG2), zugeordnet sein.

Gemäß einer Ausführungsform umfasst die Bilderfassungseinrichtung eine Kommunikationsschnittstelle, welche ausgebildet ist, das erste digitale Referenzgesichtsbild der Person abzurufen, um das erste digitale Referenzgesichtsbild der Person zu erfassen. Das erste digitale Referenzgesichtsbild kann beispielsweise auf einem Server abgelegt sein. Dadurch wird der Vorteil erreicht, dass das erste digitale Referenzgesichtsbild effizient bereitgestellt werden kann.

Gemäß einer Ausführungsform umfasst die Bilderfassungseinrichtung eine Kommunikationsschnittstelle, welche ausgebildet ist, einen Verweis auf das erste digitale Referenzgesichtsbild der Person zu empfangen, und das erste digitale Referenzgesichtsbild der Person unter Verwendung des Verweises abzurufen, um das erste digitale Referenzgesichtsbild der Person zu erfassen. Der Verweis kann beispielsweise ein Link sein. Das erste digitale Referenzgesichtsbild kann beispielsweise auf einem Server abgelegt sein. Dadurch wird der Vorteil erreicht, dass das erste digitale Referenzgesichtsbild effizient bereitgestellt werden kann.

Gemäß einer Ausführungsform umfasst die Bilderfassungseinrichtung einen Bildscanner, wobei der Bildscanner ausgebildet ist, einen Fotoabzug eines Gesichts der Person optisch zu scannen, um das erste digitale Referenzgesichtsbild der Person zu erfassen. Dadurch wird der Vorteil erreicht, dass das erste digitale Referenzgesichtsbild effizient bereitgestellt werden kann.

Gemäß einer Ausführungsform umfasst die Vorrichtung eine Datenbank, in welcher das biometrische Vergleichsreferenzmerkmal vorgespeichert ist. Dadurch wird der Vorteil erreicht, dass das biometrische Vergleichsreferenzmerkmal effizient bereitgestellt werden kann.

Gemäß einer Ausführungsform umfasst die Vorrichtung einen Bildsensor, welcher ausgebildet ist, ein digitales Gesichtsbild der Person zu erfassen, wobei die Manipulationserkennungseinrichtung ausgebildet ist, das biometrische Vergleichsreferenzmerkmal in dem digitalen Gesichtsbild der Person zu erfassen. Dadurch wird der Vorteil erreicht, dass das biometrische Vergleichsreferenzmerkmal effizient bereitgestellt werden kann.

Gemäß einer Ausführungsform ist die Manipulationserkennungseinrichtung ferner ausgebildet, ein weiteres biometrisches Referenzmerkmal in dem ersten digitalen Referenzgesichtsbild der Person zu erfassen, ein weiteres biometrisches Vergleichsreferenzmerkmal in dem digitalen Gesichtsbild der Person zu erfassen, das weitere biometrische Referenzmerkmal mit dem weiteren biometrischen Vergleichsreferenzmerkmal zu vergleichen, um einen weiteren Manipulationsindikator zu erhalten, und die Bildmanipulation in dem ersten digitalen Referenzgesichtsbild ferner auf der Basis des weiteren Manipulationsindikators zu erkennen. Dadurch wird der Vorteil erreicht, dass ein weiterer Manipulationsindikator zum Erkennen der Bildmanipulation berücksichtigt werden kann.

Gemäß einer Ausführungsform ist das biometrische Referenzmerkmal und/oder das weitere biometrische Referenzmerkmal eines der folgenden biometrischen Referenzmerkmale: ein Referenzaugenabstand der Person, eine Referenzaugenfarbe der Person, eine Referenzaugenbreite der Person, eine Referenzaugenhöhe der Person, eine Referenznasenhöhe der Person, eine Referenznasenbreite der Person, ein Referenzohrenabstand der Person, eine Referenzohrenbreite der Person, eine Referenzohrenhöhe der Person, eine Referenzmundhöhe der Person, eine Referenzmundbreite der Person, eine Referenzstirnhöhe der Person, eine Referenzstirnbreite der Person, oder ein Referenzwangenabstand der Person. Dadurch wird der Vorteil erreicht, dass charakteristische Eigenschaften menschlicher Gesichter berücksichtigt werden können.

Gemäß einer Ausführungsform ist das biometrische Vergleichsreferenzmerkmal und/oder das weitere biometrische Vergleichsreferenzmerkmal eines der folgenden biometrischen Vergleichsreferenzmerkmale: ein Vergleichsreferenzaugenabstand der Person, eine Vergleichsreferenzaugenfarbe der Person, eine Vergleichsreferenzaugenbreite der Person, eine Vergleichsreferenzaugenhöhe der Person, eine Vergleichsreferenznasenhöhe der Person, eine Vergleichsreferenznasenbreite der Person, ein Vergleichsreferenzohrenabstand der Person, eine Vergleichsreferenzohrenbreite der Person, eine Vergleichsreferenzohrenhöhe der Person, eine Vergleichsreferenzmundhöhe der Person, eine Vergleichsreferenzmundbreite der Person, eine Vergleichsreferenzstirnhöhe der Person, eine Vergleichsreferenzstirnbreite der Person, oder ein Vergleichsreferenzwangenabstand der Person. Dadurch wird der Vorteil erreicht, dass charakteristische Eigenschaften menschlicher Gesichter berücksichtigt werden können.

Gemäß einer Ausführungsform ist die Manipulationserkennungseinrichtung ferner ausgebildet, das erste digitale Referenzgesichtsbild in einen Transformationsraum, insbesondere einen Frequenzraum, zu transformieren, um ein erstes transformiertes digitales Referenzgesichtsbild zu erhalten, das digitale Gesichtsbild in den Transformationsraum, insbesondere den Frequenzraum, zu transformieren, um ein transformiertes digitales Gesichtsbild zu erhalten, das erste transformierte digitale Referenzgesichtsbild mit dem transformierten digitalen Gesichtsbild zu vergleichen, um einen weiteren Manipulationsindikator zu erhalten, und die Bildmanipulation in dem ersten digitalen Referenzgesichtsbild ferner auf der Basis des weiteren Manipulationsindikators zu erkennen. Dadurch wird der Vorteil erreicht, dass Eigenschaften des ersten digitalen Referenzgesichtsbildes und des digitalen Gesichtsbildes verglichen werden können, welche in dem Transformationsraum, insbesondere dem Frequenzraum, deutlicher hervortreten. Beispielsweise können regelmäßige Oberflächenstrukturen in dem Frequenzraum effizienter verglichen werden.

Gemäß einer Ausführungsform ist die Manipulationserkennungseinrichtung ferner ausgebildet, ein Referenzbildmerkmal in dem ersten digitalen Referenzgesichtsbild zu erfassen, ein Bildmerkmal in dem digitalen Gesichtsbild zu erfassen, eine Differenz zwischen einer Referenzlage des Referenzbildmerkmals in dem ersten digitalen Referenzgesichtsbild und einer Lage des Bildmerkmals in dem digitalen Gesichtsbild zu bestimmen, um einen weiteren Manipulationsindikator zu erhalten, und die Bildmanipulation in dem ersten digitalen Referenzgesichtsbild ferner auf der Basis des weiteren Manipulationsindikators zu erkennen. Zum Bestimmen des Referenzbildmerkmals und/oder des Bildmerkmals kann beispielsweise ein Merkmalsextraktionsalgorithmus eingesetzt werden. Dadurch wird der Vorteil erreicht, dass charakteristische Eigenschaften des ersten digitalen Referenzgesichtsbildes und des digitalen Gesichtsbildes berücksichtigt werden können.

Gemäß einer Ausführungsform ist das Bildmerkmal eines der folgenden Bildmerkmale: eine Ecke in dem digitalen Gesichtsbild, oder eine Kante in dem digitalen Gesichtsbild. Dadurch wird der Vorteil erreicht, dass charakteristische Eigenschaften digitaler Bilder berücksichtigt werden können. Das Bildmerkmal kann jedoch auch jedes andere geeignete Bildmerkmal sein, welches durch einen Merkmalsextraktionsalgorithmus bereitgestellt werden kann.

Gemäß einer Ausführungsform ist das Referenzbildmerkmal eines der folgenden Referenzbildmerkmale: eine Referenzecke in dem ersten digitalen Referenzgesichtsbild, oder eine Referenzkante in dem ersten digitalen Referenzgesichtsbild. Dadurch wird der Vorteil erreicht, dass charakteristische Eigenschaften digitaler Bilder berücksichtigt werden können. Das Referenzbildmerkmal kann jedoch auch jedes andere geeignete Referenzbildmerkmal sein, welches durch einen Merkmalsextraktionsalgorithmus bereitgestellt werden kann.

Gemäß einer Ausführungsform ist die Manipulationserkennungseinrichtung ferner ausgebildet, eine Bildmanipulation unter Verwendung des ersten digitalen Referenzgesichtsbildes und des digitalen Gesichtsbildes durchzuführen, um ein manipuliertes digitales Referenzgesichtsbild zu erhalten, das erste digitale Referenzgesichtsbild mit dem manipulierten digitalen Referenzgesichtsbild zu vergleichen, um einen weiteren Manipulationsindikator zu erhalten, und die Bildmanipulation in dem ersten digitalen Referenzgesichtsbild ferner auf der Basis des weiteren Manipulationsindikators zu erkennen. Dadurch wird der Vorteil erreicht, dass eine Auswirkung einer Bildmanipulation berücksichtigt werden kann.

Gemäß einer Ausführungsform ist die Manipulationserkennungseinrichtung ferner ausgebildet, einen Grad eines Verzerrungsartefakts der Bildmanipulation, insbesondere einer Doppelung oder einer Verschmierung, in dem ersten digitalen Referenzgesichtsbild zu erfassen, um einen weiteren Manipulationsindikator zu erhalten, und die Bildmanipulation in dem ersten digitalen Referenzgesichtsbild ferner auf der Basis des weiteren Manipulationsindikators zu erkennen. Dadurch wird der Vorteil erreicht, dass typische Verzerrungsartefakte von Bildmanipulationen berücksichtigt werden können.

Gemäß einer Ausführungsform ist die Manipulationserkennungseinrichtung ausgebildet, ein statistisches Referenzmerkmal in dem ersten digitalen Referenzgesichtsbild zu erfassen, ein statistisches Merkmal in dem digitalen Gesichtsbild der Person zu erfassen, das statistische Referenzmerkmal mit dem statistischen Merkmal zu vergleichen, um einen weiteren Manipulationsindikator zu erhalten, und die Bildmanipulation in dem ersten digitalen Referenzgesichtsbild ferner auf der Basis des weiteren Manipulationsindikators zu erkennen. Dadurch wird der Vorteil erreicht, dass statistische Eigenschaften des ersten digitalen Referenzgesichtsbildes und des digitalen Gesichtsbildes berücksichtigt werden können.

Gemäß einer Ausführungsform ist die Manipulationserkennungseinrichtung ferner ausgebildet, eine Differenz des Manipulationsindikators und eines vorbestimmten Manipulationsreferenzwertes zu bestimmen, um einen Differenzwert zu erhalten, eine Differenz zumindest eines weiteren Manipulationsindikators und zumindest eines weiteren vorbestimmten Manipulationsreferenzwertes zu bestimmen, um zumindest einen weiteren Differenzwert zu erhalten, eine Summe des Differenzwertes und des zumindest einen weiteren Differenzwertes zu bestimmen, um einen Summenwert zu erhalten, und die Bildmanipulation in dem ersten digitalen Referenzgesichtsbild zu erkennen falls der Summenwert einen vorbestimmten Summenschwellenwert überschreitet. Die Manipulationsindikatoren können jeweils eine Konfidenz bzw. eine Wahrscheinlichkeit für das Vorliegen der Bildmanipulation repräsentieren. Dadurch wird der Vorteil erreicht, dass eine gemeinsame Auswertung der Manipulationsindikatoren mittels eines statistischen Ansatzes erfolgen kann.

Gemäß einer Ausführungsform ist die Manipulationserkennungseinrichtung ferner ausgebildet, die Bildmanipulation in dem ersten digitalen Referenzgesichtsbild unter Verwendung eines neuronalen Netzes zu erkennen, wobei das neuronale Netz eine Eingangsschicht mit einem Eingang und zumindest einem weiteren Eingang aufweist, wobei das neuronale Netz eine Ausgangsschicht mit einem Ausgang aufweist, wobei der Manipulationsindikator dem Eingang zugeordnet ist, wobei der zumindest eine weitere Manipulationsindikator dem zumindest einen weiteren Eingang zugeordnet ist, und wobei der Ausgang die Bildmanipulation in dem ersten digitalen Referenzgesichtsbild anzeigt. Die Manipulationsindikatoren können jeweils eine Konfidenz bzw. eine Wahrscheinlichkeit für das Vorliegen der Bildmanipulation repräsentieren. Dadurch wird der Vorteil erreicht, dass eine gemeinsame Auswertung der Manipulationsindikatoren mittels eines neuronalen Netzes erfolgen kann.

Das neuronale Netz kann eine Mehrzahl von Neuronen umfassen, wobei jedem Neuron der Mehrzahl von Neuronen jeweils ein Gewichtswert zugeordnet ist. Das neuronale Netz kann vorab, beispielsweise mittels eines Deep Learning Ansatzes, trainiert worden sein, um die jeweiligen Gewichtswerte zu bestimmen. Das Training kann beispielsweise auf Grundlage einer Mehrzahl vorbekannter digitaler Referenzgesichtsbilder mit bewusst eingebrachten Bildmanipulationen erfolgen.

Gemäß einer Ausführungsform ist die Manipulationserkennungseinrichtung ferner ausgebildet, das erste digitale Referenzgesichtsbild der Person und das digitale Gesichtsbild der Person auf einen gemeinsamen Skalierungsmaßstab zu skalieren, und/oder das erste digitale Referenzgesichtsbild der Person und das digitale Gesichtsbild der Person auf eine gemeinsame Ausrichtungsachse zu drehen. Dadurch wird der Vorteil erreicht, dass die jeweiligen Manipulationsindikatoren effizienter bestimmt werden können.

Gemäß einer Ausführungsform ist die Manipulationserkennungseinrichtung ferner ausgebildet, das erste digitale Referenzgesichtsbild der Person und/oder das digitale Gesichtsbild der Person auf einen vorbestimmten Bildausschnitt zu beschneiden. Der vorbestimmte Bildausschnitt kann beispielsweise einen Bereich an den Augen der Person, der Nase der Person, insbesondere der Nasenspitze der Person, dem Mund der Person, den Ohren der Person, einem Bart der Person, Haaren der Person, einer Brille der Person, insbesondere einer Brillenbegrenzung, oder einem Gesichtsrand der Person umfassen. Dadurch wird der Vorteil erreicht, dass die jeweiligen Manipulationsindikatoren effizienter bestimmt werden können.

Gemäß einer Ausführungsform ist die Bilderzeugungseinrichtung ausgebildet, das erste digitale Referenzgesichtsbild mit der ersten Referenzbildauflösung in das zweite digitale Referenzgesichtsbild mit der zweiten Referenzbildauflösung zu konvertieren. Dadurch wird der Vorteil erreicht, dass das zweite digitale Referenzgesichtsbild effizient auf der Basis des ersten digitalen Referenzgesichtsbildes erzeugt werden kann.

Gemäß einer Ausführungsform ist die erste Referenzbildauflösung größer als die zweite Referenzbildauflösung. Dadurch wird der Vorteil erreicht, dass beispielsweise ein hochaufgelöstes erstes digitales Referenzgesichtsbild der Erkennung der Bildmanipulation zugrunde gelegt werden kann, und das niedriger aufgelöste zweite digitale Referenzgesichtsbild in dem Identitätsdokument der Person gespeichert werden kann.

Gemäß einem zweiten Aspekt betrifft die Erfindung ein Verfahren zum Personalisieren eines Identitätsdokumentes einer Person. Das Verfahren umfasst ein Erfassen eines ersten digitalen Referenzgesichtsbildes der Person durch eine Bilderfassungseinrichtung, wobei das erste digitale Referenzgesichtsbild der Person eine erste Referenzbildauflösung aufweist, ein Erfassen eines biometrischen Referenzmerkmals in dem ersten digitalen Referenzgesichtsbild der Person durch eine Manipulationserkennungseinrichtung, ein Vergleichen des biometrischen Referenzmerkmals mit einem biometrischen Vergleichsreferenzmerkmal durch die Manipulationserkennungseinrichtung, um einen Manipulationsindikator zu erhalten, ein Erkennen einer Bildmanipulation in dem ersten digitalen Referenzgesichtsbild auf der Basis des Manipulationsindikators durch die Manipulationserkennungseinrichtung, falls keine Bildmanipulation in dem ersten digitalen Referenzgesichtsbild erkannt wird, ein Erzeugen eines zweiten digitalen Referenzgesichtsbildes der Person auf der Basis des ersten digitalen Referenzgesichtsbildes der Person durch eine Bilderzeugungseinrichtung, wobei das zweite digitale Referenzgesichtsbild der Person eine zweite Referenzbildauflösung aufweist, und ein Speichern des zweiten digitalen Referenzgesichtsbildes der Person in dem Identitätsdokument der Person durch eine Personalisierungseinrichtung, um das Identitätsdokument der Person zu personalisieren.

Das Verfahren kann durch die Vorrichtung gemäß dem ersten Aspekt der Erfindung durchgeführt werden. Weitere Merkmale des Verfahrens resultieren unmittelbar aus den Merkmalen oder der Funktionalität der Vorrichtung gemäß dem ersten Aspekt der Erfindung.

Gemäß einem dritten Aspekt betrifft die Erfindung ein Computerprogramm mit einem Programmcode zum Durchführen des Verfahrens gemäß dem zweiten Aspekt der Erfindung, wenn der Programmcode durch eine Vorrichtung ausgeführt wird. Die Vorrichtung kann programmtechnisch eingerichtet sein, um den Programmcode auszuführen.

Die Erfindung kann in Hardware und/oder in Software realisiert werden.

### BESCHREIBUNG DER FIGUREN

Weitere Ausführungsbeispiele werden bezugnehmend auf die beiliegenden Zeichnungen näher erläutert. Es zeigen:
Fig. 1 ein schematisches Diagramm einer Vorrichtung zum Personalisieren eines Identitätsdokumentes einer Person; und
Fig. 2 ein schematisches Diagramm eines Verfahrens zum Personalisieren eines Identitätsdokumentes einer Person.

### DETAILIERTE BESCHREIBUNG DER FIGUREN

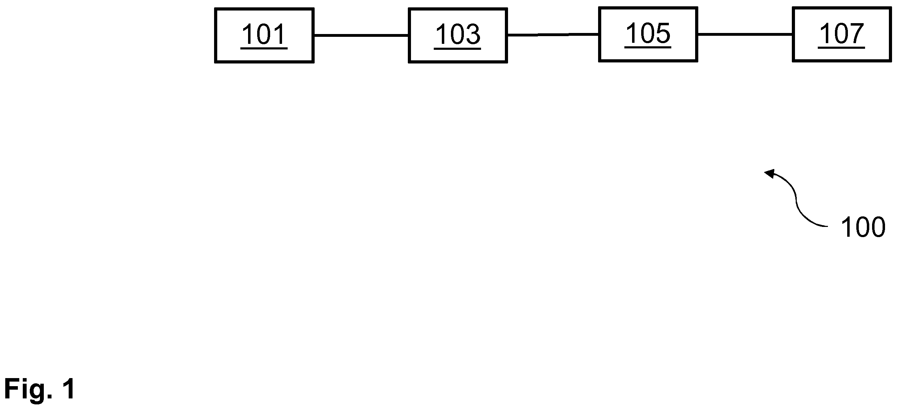

Fig. 1 zeigt ein schematisches Diagramm einer Vorrichtung 100 zum Personalisieren eines Identitätsdokumentes einer Person. Durch die Vorrichtung 100 erfolgt eine Aufspaltung der herkömmlichen Bilderfassung in mehrere Teilschritte betreffend Bilderfassung, Manipulationserkennung und Bilderzeugung.

Die Vorrichtung 100 umfasst eine Bilderfassungseinrichtung 101, welche ausgebildet ist, ein erstes digitales Referenzgesichtsbild der Person zu erfassen, wobei das erste digitale Referenzgesichtsbild der Person eine erste Referenzbildauflösung aufweist. Die Bilderfassungseinrichtung 101 kann eine Kommunikationsschnittstelle umfassen, welche ausgebildet ist, das erste digitale Referenzgesichtsbild der Person abzurufen, um das erste digitale Referenzgesichtsbild der Person zu erfassen. Die Kommunikationsschnittstelle kann zusätzlich oder alternativ ausgebildet sein, einen Verweis auf das erste digitale Referenzgesichtsbild der Person zu empfangen, und das erste digitale Referenzgesichtsbild der Person unter Verwendung des Verweises abzurufen, um das erste digitale Referenzgesichtsbild der Person zu erfassen. Der Verweis kann beispielsweise ein Link sein. Das erste digitale Referenzgesichtsbild kann beispielsweise auf einem Server abgelegt sein. Alternativ kann die Bilderfassungseinrichtung 101 einen Bildscanner umfassen, wobei der Bildscanner ausgebildet ist, einen Fotoabzug eines Gesichts der Person optisch zu scannen, um das erste digitale Referenzgesichtsbild der Person zu erfassen. Folglich kann ein hochaufgelöstes erstes digitales Referenzgesichtsbild der Person bereitgestellt werden.

Das erste digitale Referenzgesichtsbild wird folglich durch die Bilderfassungseinrichtung 101 digital erfasst. Im Unterschied zur herkömmlichen Bilderfassung ist das erste digitale Referenzgesichtsbild typischerweise nicht ein für Identitätsdokumente gemäß der Datengruppe DG2 taugliches Portrait, mit einer seitens der ICAO empfohlenen Inter-Eye-Distance (IED) von 120 Pixeln, sondern ein hochaufgelöstes, möglichst unbearbeitetes und möglichst wenig komprimiertes Bild. Das erste digitale Referenzgesichtsbild kann so hochauflösend sein, wie das fotographische Equipment es erlaubt. Beispielsweise kann die IED im Bereich von >400 Pixeln oder darüber liegen, welche mit modernen Fotokameras problemlos erreichbar sein kann. Das erste digitale Referenzgesichtsbild kann nahezu verlustfrei komprimiert sein. Nahezu verlustfrei deshalb, weil in den meisten Fotokameras eine initiale JPEG-Kompression stattfinden kann bzw. bei der Entwicklung der Rohbilder in der Fotokamera stets bestimmte Verarbeitungsschritte stattfinden können, welche zu einer leicht reduzierten Auflösung führen können.

Die Vorrichtung 100 umfasst ferner eine Manipulationserkennungseinrichtung 103, welche ausgebildet ist, ein biometrisches Referenzmerkmal in dem ersten digitalen Referenzgesichtsbild der Person zu erfassen, das biometrische Referenzmerkmal mit einem biometrischen Vergleichsreferenzmerkmal zu vergleichen, um einen ersten Manipulationsindikator zu erhalten, und eine Bildmanipulation in dem ersten digitalen Referenzgesichtsbild auf der Basis des ersten Manipulationsindikators zu erkennen.

Die Vorrichtung 100, insbesondere die Manipulationserkennungseinrichtung 103, kann eine Datenbank umfassen, in welcher das biometrische Vergleichsreferenzmerkmal vorgespeichert ist. Zusammenfassend kann ein biometrischer Vergleich bzw. ein biometrisches Thresholding gegen das vorgespeicherte biometrische Vergleichsreferenzmerkmal durchgeführt werden. Das biometrische Vergleichsreferenzmerkmal kann eine typische biometrische Eigenschaft menschlicher Gesichter repräsentieren. Je größer der Unterschied ist, desto höher ist die Konfidenz bzw. Wahrscheinlichkeit für eine Bildmanipulation. Das vorgespeicherte biometrische Vergleichsmerkmal kann beispielsweise einem vorherigen Identitätsdokument der Person entnommen sein.

Die Vorrichtung 100, insbesondere die Bilderfassungseinrichtung 101 oder die Manipulationserkennungseinrichtung 103, kann einen Bildsensor umfassen, welcher ausgebildet ist, ein digitales Gesichtsbild der Person zu erfassen, wobei die Manipulationserkennungseinrichtung 103 ausgebildet ist, das biometrische Vergleichsreferenzmerkmal in dem digitalen Gesichtsbild der Person zu erfassen. Der Bildsensor kann beispielsweise eine Bildkamera oder eine Videokamera sein. Die Videokamera kann ein Video mit einer Mehrzahl von Bildframes bereitstellen, wobei das digitale Gesichtsbild durch einen Bildframe gebildet oder in einem Bildframe enthalten sein kann. Das beschriebene Konzept kann folglich für mehrere Bildframes wiederholt werden. Folglich kann das biometrische Vergleichsreferenzmerkmal live bestimmt werden. An die Qualität des erfassten digitalen Gesichtsbildes brauchen gegebenenfalls keine besonders hohen Anforderungen gestellt werden. Gegebenenfalls ist hierfür bereits ein Selbstportrait bzw. ein Selfie ausreichend.

Die Manipulationserkennungseinrichtung 103 kann ferner ausgebildet sein, ein weiteres biometrisches Referenzmerkmal in dem ersten digitalen Referenzgesichtsbild der Person zu erfassen, ein weiteres biometrisches Vergleichsreferenzmerkmal in dem digitalen Gesichtsbild der Person zu erfassen, das weitere biometrische Referenzmerkmal mit dem weiteren biometrischen Vergleichsreferenzmerkmal zu vergleichen, um einen zweiten Manipulationsindikator zu erhalten, und die Bildmanipulation in dem ersten digitalen Referenzgesichtsbild ferner auf der Basis des zweiten Manipulationsindikators zu erkennen. Das biometrische Referenzmerkmal und das weitere biometrische Referenzmerkmal können unterschiedlich sein. Das biometrische Vergleichsreferenzmerkmal und das weitere biometrische Vergleichsreferenzmerkmal können unterschiedlich sein.

Die Manipulationserkennungseinrichtung 103 kann ferner ausgebildet sein, das erste digitale Referenzgesichtsbild in einen Transformationsraum, insbesondere einen Frequenzraum, zu transformieren, um ein erstes transformiertes digitales Referenzgesichtsbild zu erhalten, das digitale Gesichtsbild in den Transformationsraum, insbesondere den Frequenzraum, zu transformieren, um ein transformiertes digitales Gesichtsbild zu erhalten, das erste transformierte digitale Referenzgesichtsbild mit dem transformierten digitalen Gesichtsbild zu vergleichen, um einen dritten Manipulationsindikator zu erhalten, und die Bildmanipulation in dem ersten digitalen Referenzgesichtsbild ferner auf der Basis des dritten Manipulationsindikators zu erkennen. Beispielsweise kann untersucht werden, ob das erste digitale Referenzgesichtsbild und das digitale Gesichtsbild gleichartig homogen strukturiert sind und ob in den verschiedenen Bereichen, beispielsweise im Hintergrund, im Vordergrund, im Gesicht, oder in ausgewählten Gesichtsbereichen, die jeweiligen Struktureigenschaften vorbestimmten Kriterien entsprechen. Insbesondere können dabei die Bildbereiche um die Augen, die Nase und/oder den Mund der Person sowie die Ränder des Gesichtes der Person betrachtet werden.

Die Manipulationserkennungseinrichtung 103 kann ferner ausgebildet sein, ein Referenzbildmerkmal in dem ersten digitalen Referenzgesichtsbild zu erfassen, ein Bildmerkmal in dem digitalen Gesichtsbild zu erfassen, eine Differenz zwischen einer Referenzlage des Referenzbildmerkmals in dem ersten digitalen Referenzgesichtsbild und einer Lage des Bildmerkmals in dem digitalen Gesichtsbild zu bestimmen, um einen vierten Manipulationsindikator zu erhalten, und die Bildmanipulation in dem ersten digitalen Referenzgesichtsbild ferner auf der Basis des vierten Manipulationsindikators zu erkennen. Zum Bestimmen des Referenzbildmerkmals und/oder des Bildmerkmals kann beispielsweise ein Merkmalsextraktionsalgorithmus eingesetzt werden. Zusammenfassend können charakteristische Eigenschaften des ersten digitalen Referenzgesichtsbildes und des digitalen Gesichtsbildes untersucht werden.

Ferner kann eine Mehrzahl von Referenzbildmerkmalen in dem ersten digitalen Referenzgesichtsbild und eine Mehrzahl von Bildmerkmalen in dem digitalen Gesichtsbild erfasst werden. Nach einer Filterung kann untersucht werden, ob die jeweilige Anzahl von Referenzbildmerkmalen bzw. Bildmerkmalen, und/oder die Differenzen der Referenzlagen bzw. Lagen übereinstimmen. Ferner kann untersucht werden, ob sich eine Verteilung von Zusammenhangskomponenten des ersten digitalen Referenzgesichtsbildes und des digitalen Gesichtsbildes voneinander unterscheiden.

Die Manipulationserkennungseinrichtung 103 kann ferner ausgebildet sein, eine Bildmanipulation unter Verwendung des ersten digitalen Referenzgesichtsbildes und des digitalen Gesichtsbildes durchzuführen, um ein manipuliertes digitales Referenzgesichtsbild zu erhalten, das erste digitale Referenzgesichtsbild mit dem manipulierten digitalen Referenzgesichtsbild zu vergleichen, um einen fünften Manipulationsindikator zu erhalten, und die Bildmanipulation in dem ersten digitalen Referenzgesichtsbild ferner auf der Basis des fünften Manipulationsindikators zu erkennen. Zusammenfassend kann untersucht werden, wie sich das erste digitale Referenzgesichtsbild verändern würde, wenn dieses unter Verwendung des digitalen Gesichtsbildes manipuliert wird.

Die Manipulationserkennungseinrichtung 103 kann ferner ausgebildet sein, einen Grad eines Verzerrungsartefakts der Bildmanipulation, insbesondere einer Doppelung oder einer Verschmierung, in dem ersten digitalen Referenzgesichtsbild zu erfassen, um einen sechsten Manipulationsindikator zu erhalten, und die Bildmanipulation in dem ersten digitalen Referenzgesichtsbild ferner auf der Basis des sechsten Manipulationsindikators zu erkennen. Derartige Verzerrungsartefakte können insbesondere im Bereich der Iriden, der Augenränder, der Brauen, der Wimpern, der Haaransätzen, der Lippen, der Mundwinkel, der Nasenlöcher, oder der Beugungen an einem Brillenrand erfasst werden.

Die Manipulationserkennungseinrichtung 103 kann ferner ausgebildet sein, ein statistisches Referenzmerkmal in dem ersten digitalen Referenzgesichtsbild zu erfassen, ein statistisches Merkmal in dem digitalen Gesichtsbild der Person zu erfassen, das statistische Referenzmerkmal mit dem statistischen Merkmal zu vergleichen, um einen siebten Manipulationsindikator zu erhalten, und die Bildmanipulation in dem ersten digitalen Referenzgesichtsbild ferner auf der Basis des siebten Manipulationsindikators zu erkennen. Das statistische Referenzmerkmal und das statistische Merkmal können ein Rauschen in dem ersten digitalen Referenzgesichtsbild und in dem digitalen Gesichtsbild repräsentieren.

Die Manipulationserkennungseinrichtung 103 kann ferner ausgebildet sein, das erste digitale Referenzgesichtsbild der Person und das digitale Gesichtsbild der Person auf einen gemeinsamen Skalierungsmaßstab zu skalieren, und/oder das erste digitale Referenzgesichtsbild der Person und das digitale Gesichtsbild der Person auf eine gemeinsame Ausrichtungsachse zu drehen. Die Manipulationserkennungseinrichtung 103 kann ferner ausgebildet sein, das erste digitale Referenzgesichtsbild der Person und/oder das digitale Gesichtsbild der Person auf einen vorbestimmten Bildausschnitt zu beschneiden. Der vorbestimmte Bildausschnitt kann beispielsweise einen Bereich an den Augen der Person, der Nase der Person, insbesondere der Nasenspitze der Person, dem Mund der Person, den Ohren der Person, einem Bart der Person, Haaren der Person, einer Brille der Person, insbesondere einer Brillenbegrenzung, oder einem Gesichtsrand der Person umfassen.

Die vorstehenden Ansätze zur Bestimmung des ersten Manipulationsindikators, des zweiten Manipulationsindikators, des dritten Manipulationsindikators, des vierten Manipulationsindikators, des fünften Manipulationsindikators, des sechsten Manipulationsindikators, und des siebten Manipulationsindikators können in beliebiger Kombination angewendet werden. So können beispielsweise lediglich der erste und der dritte Manipulationsindikator, oder lediglich der erste, der zweite, der fünfte und der siebte Manipulationsindikator bestimmt werden. Es können jedoch auch alle vorgenannten Manipulationsindikatoren bestimmt werden.

Eine gemeinsame Auswertung der verwendeten Manipulationsindikatoren kann dann beispielsweise mittels eines statistischen Ansatzes oder mittels eines neuronalen Netzes erfolgen. Die gemeinsame Auswertung soll im Folgenden beispielhaft bei Verwendung eines ersten, eines zweiten, und eines dritten Manipulationsindikators beschrieben werden.

Bei dem statistischen Ansatz ist die Manipulationserkennungseinrichtung 103 beispielsweise ausgebildet, eine Differenz des ersten Manipulationsindikators und eines vorbestimmten ersten Manipulationsreferenzwertes zu bestimmen, um einen ersten Differenzwert zu erhalten, eine Differenz des zweiten Manipulationsindikators und eines vorbestimmten zweiten Manipulationsreferenzwertes zu bestimmen, um einen zweiten Differenzwert zu erhalten, eine Differenz des dritten Manipulationsindikators und eines vorbestimmten dritten Manipulationsreferenzwertes zu bestimmen, um einen dritten Differenzwert zu erhalten, eine Summe des ersten Differenzwertes, des zweiten Differenzwertes und des dritten Differenzwertes zu bestimmen, um einen Summenwert zu erhalten, und die Bildmanipulation in dem ersten digitalen Referenzgesichtsbild zu erkennen falls der Summenwert einen vorbestimmten Summenschwellenwert überschreitet.

Alternativ ist die Manipulationserkennungseinrichtung 103 beispielsweise ausgebildet, die Bildmanipulation in dem ersten digitalen Referenzgesichtsbild unter Verwendung des neuronalen Netzes zu erkennen, wobei das neuronale Netz eine Eingangsschicht mit einem ersten Eingang, einem zweiten Eingang und einem dritten Eingang aufweist, wobei das neuronale Netz eine Ausgangsschicht mit einem Ausgang aufweist, wobei der erste Manipulationsindikator dem ersten Eingang zugeordnet ist, wobei der zweite Manipulationsindikator dem zweiten Eingang zugeordnet ist, wobei der dritte Manipulationsindikator dem dritten Eingang zugeordnet ist, und wobei der Ausgang die Bildmanipulation in dem ersten digitalen Referenzgesichtsbild anzeigt. Mittels des neuronalen Netzes wird folglich untersucht, ob das erste digitale Referenzgesichtsbild manipuliert wurde.

Zusammenfassend kann auf einem hochauflösenden verlustarmen ersten digitalen Referenzgesichtsbild eine Mehrzahl von Manipulationsdetektoren eingesetzt werden, wobei deren Ergebnisse geeignet verarbeitet bzw. fusioniert werden können. Beispielsweise kann eine Analyse auf Morphing-Artefakte durchgeführt werden. Ferner kann eine Analyse auf Presentation-Attack-Artefakte durchgeführt werden. Die Manipulationserkennungseinrichtung 103 kann beispielsweise einen Vertrauenswert bestimmen, welcher anzeigt, wie wahrscheinlich eine Bildmanipulation erkannt worden ist.

Die Vorrichtung 100 umfasst ferner eine Bilderzeugungseinrichtung 105, welche ausgebildet ist, falls keine Bildmanipulation in dem ersten digitalen Referenzgesichtsbild erkannt wird, ein zweites digitales Referenzgesichtsbild der Person auf der Basis des ersten digitalen Referenzgesichtsbildes der Person zu erzeugen, wobei das zweite digitale Referenzgesichtsbild der Person eine zweite Referenzbildauflösung aufweist. Die Bilderzeugungseinrichtung 105 kann ausgebildet sein, das erste digitale Referenzgesichtsbild mit der ersten Referenzbildauflösung in das zweite digitale Referenzgesichtsbild mit der zweiten Referenzbildauflösung zu konvertieren. Die erste Referenzbildauflösung kann größer als die zweite Referenzbildauflösung sein.

Zusammenfassend wird das erste digitale Referenzgesichtsbild weiterverarbeitet. Die Bilderzeugungseinrichtung 105 kann alle Bilder erzeugen, welche für die Personalisierung des Identitätsdokumentes erforderlich sind. Das erzeugte zweite digitale Referenzgesichtsbild kann beispielsweise im Format JPEG oder JPEG2000 für die Datengruppe 2 (DG2), für das auf einer Datenseite des Identitätsdokumentes aufzudruckende Bild, sowie für holographische und weitere Sekundärbilder bereitgestellt werden. Durch die unabhängige Erzeugung des zweiten digitalen Referenzgesichtsbildes ausgehend von einem qualitativ hochwertigen ersten digitalen Referenzgesichtsbild kann der Vorteil erreicht werden, dass abhängig von der für das jeweilige Bild verwendeten Personalisierungstechnologie ein optimales Bild bereitgestellt werden kann. Ferner können mehrfache verlustbehaftete Kompressionen vermieden werden. Etwaige Limitierungen, welche durch eine bisherige Auflösungsbegrenzung mit einer beispielhaften IED von 90 Pixeln auftreten können, können somit entfallen.

Die Vorrichtung 100 umfasst ferner eine Personalisierungseinrichtung 107, welche ausgebildet ist, das zweite digitale Referenzgesichtsbild der Person in dem Identitätsdokument der Person zu speichern, um das Identitätsdokument der Person zu personalisieren. Die Personalisierungseinrichtung 107 kann mit dem Identitätsdokument der Person drahtgebunden oder drahtlos kommunizieren.

Die Vorrichtung 100 kann die Erkennung der Bildmanipulation automatisiert durchführen und beispielsweise als unterstützendes Werkzeug für einen Anwender eingesetzt werden. Bei der Unterstützung können software- und/oder hardwarebasierte Werkzeuge verwendet werden. Dies kann beispielsweise dadurch geschehen, dass der Anwender zu einem Bereich geführt wird, in welchem durch die Vorrichtung 100 eine Bildmanipulation entdeckt wurde. Ferner kann beispielsweise in diesen Bereich hineingezoomt werden. Derartige Bereiche können beispielsweise ein Auge, die Nasenlöcher, ein Ohr oder einen Mund der Person beinhalten. Je nach Anwendungsfall kann der geübte oder ungeübte Anwender somit in die Lage versetzt werden, das erste digitale Referenzgesichtsbild zusätzlich manuell auf Bildmanipulationen bzw. Anomalien hin zu untersuchen.

Auch eine umgekehrte Vorgehensweise ist möglich, bei der der Anwender vorab einen verdächtigen Bereich in dem ersten digitalen Referenzgesichtsbild markiert, welcher dann durch die Vorrichtung 100 untersucht wird, oder der Anwender vorab bestimmte Bereiche ausschließt. Dies kann beispielsweise dann vorteilhaft sein, wenn bereits bekannt ist, dass bestimmte Bereiche absichtlich und in zulässiger Weise verändert wurden.

Alle vorgenannten Komponenten der Vorrichtung 100, insbesondere die Bilderfassungseinrichtung 101, die Manipulationserkennungseinrichtung 103, der Bildsensor, die Bilderzeugungseinrichtung 105 sowie die Personalisierungseinrichtung 107, können räumlich benachbart oder voneinander getrennt angeordnet sein und beispielsweise mittels Kommunikationsverbindungen über ein Kommunikationsnetzwerk miteinander kommunizieren. Beispielsweise können die Bilderfassungseinrichtung 101, die Manipulationserkennungseinrichtung 103 sowie der Bildsensor in einem Passamt angeordnet sein, wohingegen die Bilderzeugungseinrichtung 105 sowie die Personalisierungseinrichtung 107 bei einem Hersteller des Identitätsdokumentes angeordnet sein können. Die Manipulationserkennungseinrichtung 103 kann jedoch alternativ ebenfalls bei dem Hersteller des Identitätsdokuments angeordnet sein.

Durch die Vorrichtung 100 wird somit eine Möglichkeit geschaffen, bei einem von einem Antragsteller beigebrachten Passfoto festzustellen, ob dieses manipuliert, insbesondere gemorpht, oder anderweitig unzulässig modifiziert worden ist. Zugleich kann festgestellt werden, ob weitere Veränderungen, beispielsweise Verschönerungen, stattgefunden haben. Beispielsweise könnten Pickel beseitigt, Falten geglättet, oder die Nase gerichtet worden sein. Dies trägt gegebenenfalls ebenfalls zur Verbesserung der Bildqualität bei und kann ein vorteilhafter Nebeneffekt sein. Die Vorrichtung 100 kann insbesondere im Rahmen eines Pass-Antrags-Verfahrens durch Behörden eingesetzt werden. Die Vorrichtung 100 kann dezentral oder zentral bzw. serverbasiert implementiert werden.

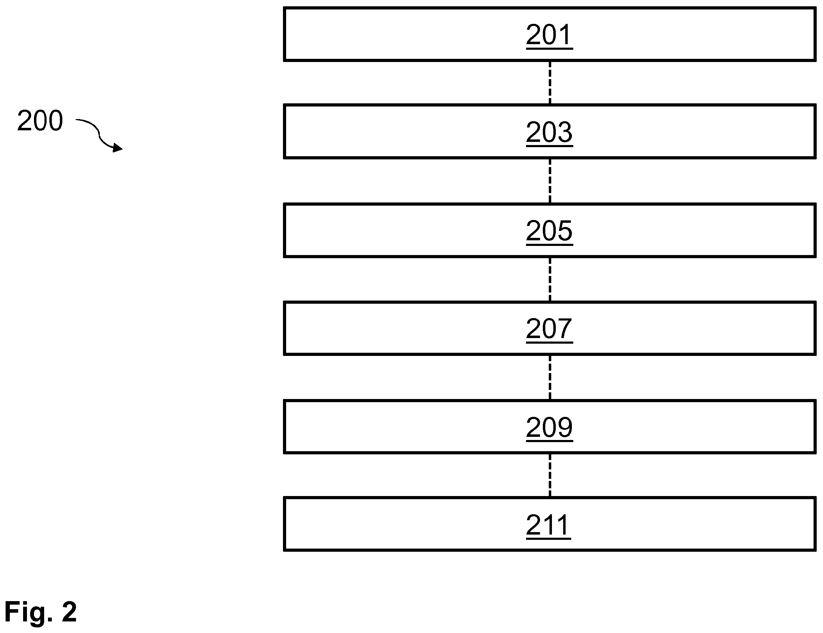

Fig. 2 zeigt ein schematisches Diagramm eines Verfahrens 200 zum Personalisieren eines Identitätsdokumentes einer Person.

Das Verfahren 200 umfasst ein Erfassen 201 eines ersten digitalen Referenzgesichtsbildes der Person durch eine Bilderfassungseinrichtung, wobei das erste digitale Referenzgesichtsbild der Person eine erste Referenzbildauflösung aufweist, ein Erfassen 203 eines biometrischen Referenzmerkmals in dem ersten digitalen Referenzgesichtsbild der Person durch eine Manipulationserkennungseinrichtung, ein Vergleichen 205 des biometrischen Referenzmerkmals mit einem biometrischen Vergleichsreferenzmerkmal durch die Manipulationserkennungseinrichtung, um einen Manipulationsindikator zu erhalten, ein Erkennen 207 einer Bildmanipulation in dem ersten digitalen Referenzgesichtsbild auf der Basis des Manipulationsindikators durch die Manipulationserkennungseinrichtung, falls keine Bildmanipulation in dem ersten digitalen Referenzgesichtsbild erkannt wird, ein Erzeugen 209 eines zweiten digitalen Referenzgesichtsbildes der Person auf der Basis des ersten digitalen Referenzgesichtsbildes der Person durch eine Bilderzeugungseinrichtung, wobei das zweite digitale Referenzgesichtsbild der Person eine zweite Referenzbildauflösung aufweist, und ein Speichern 211 des zweiten digitalen Referenzgesichtsbildes der Person in dem Identitätsdokument der Person durch eine Personalisierungseinrichtung, um das Identitätsdokument der Person zu personalisieren.

Das Verfahren 200 kann unter Verwendung eines Computerprogramms mit einem Programmcode durchgeführt werden. Die Vorrichtung kann programmtechnisch eingerichtet sein, um den Programmcode auszuführen.

Alle in Verbindung mit einzelnen Ausführungsformen der Erfindung gezeigten oder beschriebenen Merkmale können in beliebiger Kombination in dem erfindungsgemäßen Gegenstand vorgesehen sein, um gleichzeitig deren vorteilhaften Wirkungen zu realisieren.

### BEZUGSZEICHENLISTE

- 100: Vorrichtung
- 101: Bilderfassungseinrichtung
- 103: Manipulationserkennungseinrichtung
- 105: Bilderzeugungseinrichtung
- 107: Personalisierungseinrichtung

- 200: Verfahren
- 201: Erfassen
- 203: Erfassen
- 205: Vergleichen
- 207: Erkennen
- 209: Erzeugen
- 211: Speichern

## Patentansprüche

1. Vorrichtung (100) zum Personalisieren eines Identitätsdokumentes einer Person, mit:
einer Bilderfassungseinrichtung (101), welche ausgebildet ist, ein erstes digitales Referenzgesichtsbild der Person zu erfassen, wobei das erste digitale Referenzgesichtsbild der Person eine erste Referenzbildauflösung aufweist;
einer Manipulationserkennungseinrichtung (103), welche ausgebildet ist, ein biometrisches Referenzmerkmal in dem ersten digitalen Referenzgesichtsbild der Person zu erfassen, das biometrische Referenzmerkmal mit einem biometrischen Vergleichsreferenzmerkmal zu vergleichen, um einen Manipulationsindikator zu erhalten, und eine Bildmanipulation in dem ersten digitalen Referenzgesichtsbild auf der Basis des Manipulationsindikators zu erkennen; wobei der Manipulationsindikator eine Konfidenz für das Vorliegen der Bildmanipulation repräsentiert, wobei je größer der Unterschied ist, desto höher ist die Konfidenz für eine Bildmanipulation,
einer Bilderzeugungseinrichtung (105), welche ausgebildet ist, falls keine Bildmanipulation in dem ersten digitalen Referenzgesichtsbild erkannt wird, ein zweites digitales Referenzgesichtsbild der Person auf der Basis des ersten digitalen Referenzgesichtsbildes der Person zu erzeugen, wobei das zweite digitale Referenzgesichtsbild der Person eine zweite Referenzbildauflösung aufweist; und
einer Personalisierungseinrichtung (107), welche ausgebildet ist, das zweite digitale Referenzgesichtsbild der Person in dem Identitätsdokument der Person zu speichern, um das Identitätsdokument der Person zu personalisieren,
wobei die erste Referenzbildauflösung größer als die zweite Referenzbildauflösung ist,
wobei die Bilderzeugungseinrichtung (105) ausgebildet ist, das erste digitale Referenzgesichtsbild mit der ersten Referenzbildauflösung in das zweite digitale Referenzgesichtsbild mit der zweiten Referenzbildauflösung zu konvertieren.

2. Vorrichtung (100) nach Anspruch 1, wobei die Bilderfassungseinrichtung (101) eine Kommunikationsschnittstelle umfasst, welche ausgebildet ist, einen Verweis auf das erste digitale Referenzgesichtsbild der Person zu empfangen, und das erste digitale Referenzgesichtsbild der Person unter Verwendung des Verweises abzurufen, um das erste digitale Referenzgesichtsbild der Person zu erfassen.

3. Vorrichtung (100) nach Anspruch 1, wobei die Bilderfassungseinrichtung (101) einen Bildscanner umfasst, wobei der Bildscanner ausgebildet ist, einen Fotoabzug eines Gesichts der Person optisch zu scannen, um das erste digitale Referenzgesichtsbild der Person zu erfassen.

4. Vorrichtung (100) nach einem der vorstehenden Ansprüche, mit:
einem Bildsensor, welcher ausgebildet ist, ein digitales Gesichtsbild der Person zu erfassen;
wobei die Manipulationserkennungseinrichtung (103) ausgebildet ist, das biometrische Vergleichsreferenzmerkmal in dem digitalen Gesichtsbild der Person zu erfassen.

5. Vorrichtung (100) nach Anspruch 4, wobei die Manipulationserkennungseinrichtung (103) ferner ausgebildet ist, ein weiteres biometrisches Referenzmerkmal in dem ersten digitalen Referenzgesichtsbild der Person zu erfassen, ein weiteres biometrisches Vergleichsreferenzmerkmal in dem digitalen Gesichtsbild der Person zu erfassen, das weitere biometrische Referenzmerkmal mit dem weiteren biometrischen Vergleichsreferenzmerkmal zu vergleichen, um einen weiteren Manipulationsindikator zu erhalten, und die Bildmanipulation in dem ersten digitalen Referenzgesichtsbild ferner auf der Basis des weiteren Manipulationsindikators zu erkennen.

6. Vorrichtung (100) nach einem der Ansprüche 4 oder 5, wobei die Manipulationserkennungseinrichtung (103) ferner ausgebildet ist, das erste digitale Referenzgesichtsbild in einen Transformationsraum, insbesondere einen Frequenzraum, zu transformieren, um ein erstes transformiertes digitales Referenzgesichtsbild zu erhalten, das digitale Gesichtsbild in den Transformationsraum, insbesondere den Frequenzraum, zu transformieren, um ein transformiertes digitales Gesichtsbild zu erhalten, das erste transformierte digitale Referenzgesichtsbild mit dem transformierten digitalen Gesichtsbild zu vergleichen, um einen weiteren Manipulationsindikator zu erhalten, und die Bildmanipulation in dem ersten digitalen Referenzgesichtsbild ferner auf der Basis des weiteren Manipulationsindikators zu erkennen.

7. Vorrichtung (100) nach einem der Ansprüche 4 bis 6, wobei die Manipulationserkennungseinrichtung (103) ferner ausgebildet ist, ein Referenzbildmerkmal in dem ersten digitalen Referenzgesichtsbild zu erfassen, ein Bildmerkmal in dem digitalen Gesichtsbild zu erfassen, eine Differenz zwischen einer Referenzlage des Referenzbildmerkmals in dem ersten digitalen Referenzgesichtsbild und einer Lage des Bildmerkmals in dem digitalen Gesichtsbild zu bestimmen, um einen weiteren Manipulationsindikator zu erhalten, und die Bildmanipulation in dem ersten digitalen Referenzgesichtsbild ferner auf der Basis des weiteren Manipulationsindikators zu erkennen.

8. Vorrichtung (100) nach Anspruch 7, wobei das Bildmerkmal eines der folgenden Bildmerkmale ist: eine Ecke in dem digitalen Gesichtsbild, oder eine Kante in dem digitalen Gesichtsbild.

9. Vorrichtung (100) nach einem der Ansprüche 4 bis 8, wobei die Manipulationserkennungseinrichtung (103) ferner ausgebildet ist, eine Bildmanipulation unter Verwendung des ersten digitalen Referenzgesichtsbildes und des digitalen Gesichtsbildes durchzuführen, um ein manipuliertes digitales Referenzgesichtsbild zu erhalten, das erste digitale Referenzgesichtsbild mit dem manipulierten digitalen Referenzgesichtsbild zu vergleichen, um einen weiteren Manipulationsindikator zu erhalten, und die Bildmanipulation in dem ersten digitalen Referenzgesichtsbild ferner auf der Basis des weiteren Manipulationsindikators zu erkennen.

10. Vorrichtung (100) nach einem der Ansprüche 5 bis 9, wobei die Manipulationserkennungseinrichtung (103) ferner ausgebildet ist, eine Differenz des Manipulationsindikators und eines vorbestimmten Manipulationsreferenzwertes zu bestimmen, um einen Differenzwert zu erhalten, eine Differenz eines weiteren Manipulationsindikators und eines weiteren vorbestimmten Manipulationsreferenzwertes zu bestimmen, um einen weiteren Differenzwert zu erhalten, eine Summe des Differenzwertes und des weiteren Differenzwertes zu bestimmen, um einen Summenwert zu erhalten, und die Bildmanipulation in dem ersten digitalen Referenzgesichtsbild zu erkennen falls der Summenwert einen vorbestimmten Summenschwellenwert überschreitet.

11. Vorrichtung (100) nach einem der Ansprüche 5 bis 9, wobei die Manipulationserkennungseinrichtung (103) ferner ausgebildet ist, die Bildmanipulation in dem ersten digitalen Referenzgesichtsbild unter Verwendung eines neuronalen Netzes zu erkennen, wobei das neuronale Netz eine Eingangsschicht mit einem Eingang und einem weiteren Eingang aufweist, wobei das neuronale Netz eine Ausgangsschicht mit einem Ausgang aufweist, wobei der Manipulationsindikator dem Eingang zugeordnet ist, wobei der weitere Manipulationsindikator dem weiteren Eingang zugeordnet ist, und wobei der Ausgang die Bildmanipulation in dem ersten digitalen Referenzgesichtsbild anzeigt.

12. Verfahren (200) zum Personalisieren eines Identitätsdokumentes einer Person, mit:
Erfassen (201) eines ersten digitalen Referenzgesichtsbildes der Person durch eine Bilderfassungseinrichtung (101), wobei das erste digitale Referenzgesichtsbild der Person eine erste Referenzbildauflösung aufweist;
Erfassen (203) eines biometrischen Referenzmerkmals in dem ersten digitalen Referenzgesichtsbild der Person durch eine Manipulationserkennungseinrichtung (103);
Vergleichen (205) des biometrischen Referenzmerkmals mit einem biometrischen Vergleichsreferenzmerkmal durch die Manipulationserkennungseinrichtung (103), um einen Manipulationsindikator zu erhalten;
wobei der Manipulationsindikator eine Konfidenz für das Vorliegen der Bildmanipulation repräsentiert, wobei je größer der Unterschied ist, desto höher ist die Konfidenz für eine Bildmanipulation,
Erkennen (207) einer Bildmanipulation in dem ersten digitalen Referenzgesichtsbild auf der Basis des Manipulationsindikators durch die Manipulationserkennungseinrichtung (103);
falls keine Bildmanipulation in dem ersten digitalen Referenzgesichtsbild erkannt wird, Erzeugen (209) eines zweiten digitalen Referenzgesichtsbildes der Person auf der Basis des ersten digitalen Referenzgesichtsbildes der Person durch eine Bilderzeugungseinrichtung (105), wobei das zweite digitale Referenzgesichtsbild der Person eine zweite Referenzbildauflösung aufweist; und
Speichern (211) des zweiten digitalen Referenzgesichtsbildes der Person in dem Identitätsdokument der Person durch eine Personalisierungseinrichtung (107), um das Identitätsdokument der Person zu personalisieren,
wobei die erste Referenzbildauflösung größer als die zweite Referenzbildauflösung ist, wobei das erste digitale Referenzgesichtsbild mit der ersten Referenzbildauflösung in das zweite digitale Referenzgesichtsbild mit der zweiten Referenzbildauflösung konvertiert wird.

13. Computerprogramm mit einem Programmcode zum Durchführen des Verfahrens (200) nach Anspruch 12, wenn der Programmcode durch eine Vorrichtung (100) ausgeführt wird.

## Claims

1. A device (100) for personalizing an identity document of a person, comprising:
an image capture device (101), which is configured to capture a first digital reference facial image of the person, wherein the first digital reference facial image of the person has a first reference image resolution;
a manipulation detection device (103), which is configured to detect a biometric reference feature in the first digital reference facial image of the person, to compare the biometric reference feature with a biometric comparison reference feature in order to obtain a manipulation indicator, and to detect an image manipulation in the first digital reference facial image on the basis of the manipulation indicator;
wherein the manipulation indicator represents a confidence for the presence of an image manipulation, wherein the greater the difference, the higher the confidence for an image manipulation,
an image generation device (105), which is configured, if no image manipulation is detected in the first digital reference facial image, to generate a second digital reference facial image of the person on the basis of the first digital reference facial image of the person, wherein the second digital reference facial image of the person has a second reference image resolution; and
a personalization device (107), which is configured to store the second digital reference facial image of the person in the identity document of the person in order to personalize the identity document of the person,
wherein the first reference image resolution is greater than the second reference image resolution,
wherein the image generation device (105) is configured to convert the first digital reference facial image having the first reference image resolution into the second digital reference facial image having the second reference image resolution.

2. The device (100) according to claim 1, wherein the image capture device (101) comprises a communication interface, which is configured to receive a reference to the first digital reference facial image of the person and to retrieve the first digital reference facial image of the person using the reference in order to capture the first digital reference facial image of the person.

3. The device (100) according to claim 1, wherein the image capture device (101) comprises an image scanner, wherein the image scanner is configured to optically scan a photographic print of a face of the person in order to capture the first digital reference facial image of the person.

4. The device (100) according to one of the preceding claims, comprising:
an image sensor, which is configured to capture a digital facial image of the person;
wherein the manipulation detection device (103) is configured to detect the biometric comparison reference feature in the digital facial image of the person.

5. The device (100) according to claim 4, wherein the manipulation detection device (103) is further configured to detect a further biometric reference feature in the first digital reference facial image of the person, to detect a further biometric comparison reference feature in the digital facial image of the person, to compare the further biometric reference feature with the further biometric comparison reference feature in order to obtain a further manipulation indicator, and to detect the image manipulation in the first digital reference facial image further based on the further manipulation indicator.

6. The device (100) according to one of claims 4 or 5, wherein the manipulation detection device (103) is further configured to transform the first digital reference facial image into a transformation space, in particular a frequency space, in order to obtain a first transformed digital reference facial image, to transform the digital facial image into the transformation space, in particular the frequency space, in order to obtain a transformed digital facial image, to compare the first transformed digital reference facial image with the transformed digital facial image in order to obtain a further manipulation indicator, and to detect the image manipulation in the first digital reference facial image further on the basis of the further manipulation indicator.

7. The device (100) according to one of claims 4 to 6, wherein the manipulation detection device (103) is further configured to detect a reference image feature in the first digital reference facial image, detect an image feature in the digital facial image, determine a difference between a reference position of the reference image feature in the first digital reference facial image and a position of the image feature in the digital facial image to obtain a further manipulation indicator, and detect the image manipulation in the first digital reference facial image further based on the further manipulation indicator.

8. The device (100) of claim 7, wherein the image feature is one of the following image features: a corner in the digital facial image, or an edge in the digital facial image.

9. The device (100) according to one of claims 4 to 8, wherein the manipulation detection device (103) is further configured to perform an image manipulation using the first digital reference facial image and the digital facial image in order to obtain a manipulated digital reference facial image, to compare the first digital reference facial image with the manipulated digital reference facial image in order to obtain a further manipulation indicator, and to detect the image manipulation in the first digital reference facial image further based on the further manipulation indicator.

10. The device (100) according to one of claims 5 to 9, wherein the manipulation detection device (103) is further configured to determine a difference between the manipulation indicator and a predetermined manipulation reference value in order to obtain a difference value, to determine a difference between a further manipulation indicator and a further predetermined manipulation reference value in order to obtain a further difference value, to determine a sum of the difference value and the further difference value in order to obtain a sum value, and to detect the image manipulation in the first digital reference facial image if the sum value exceeds a predetermined sum threshold value.

11. The device (100) according to one of claims 5 to 9, wherein the manipulation detection device (103) is further configured to detect the image manipulation in the first digital reference facial image using a neural network, wherein the neural network has an input layer with an input and a further input, wherein the neural network has an output layer with an output, wherein the manipulation indicator is associated with the input, wherein the further manipulation indicator is associated with the further input, and wherein the output indicates the image manipulation in the first digital reference facial image.

12. A method (200) for personalizing an identity document of a person, comprising:
capturing (201) a first digital reference facial image of the person by an image capturing device (101), wherein the first digital reference facial image of the person has a first reference image resolution;
detecting (203) a biometric reference feature in the first digital reference facial image of the person by a manipulation detection device (103);
comparing (205) the biometric reference feature with a biometric comparison reference feature by the manipulation detection device (103) in order to obtain a manipulation indicator;
wherein the manipulation indicator represents a confidence for the presence of image manipulation, wherein the greater the difference, the higher the confidence for an image manipulation,
detecting (207) an image manipulation in the first digital reference facial image on the basis of the manipulation indicator by the manipulation detection device (103);
if no image manipulation is detected in the first digital reference facial image, generating (209) a second digital reference facial image of the person on the basis of the first digital reference facial image of the person by an image generation device (105), wherein the second digital reference facial image of the person has a second reference image resolution; and
storing (211) the second digital reference facial image of the person in the identity document of the person by a personalization device (107) in order to personalize the identity document of the person,
wherein the first reference image resolution is greater than the second reference image resolution,
wherein the first digital reference facial image having the first reference image resolution is converted into the second digital reference facial image having the second reference image resolution.

13. A computer program comprising a program code for performing the method (200) according to claim 12, when the program code is executed by a device (100).

## Revendications

1. Dispositif (100) de personnalisation d'un document d'identité d'une personne, comprenant :
un dispositif de capture d'image (101), qui est configuré pour capturer une première image faciale de référence numérique de la personne, la première image faciale de référence numérique de la personne ayant une première résolution d'image de référence ;
un dispositif de détection de manipulation (103), qui est configuré pour détecter une caractéristique de référence biométrique dans la première image faciale de référence numérique de la personne, pour comparer la caractéristique de référence biométrique avec une caractéristique de référence de comparaison biométrique afin d'obtenir un indicateur de manipulation, et pour détecter une manipulation d'image dans la première image faciale de référence numérique sur la base de l'indicateur de manipulation ;
où l'indicateur de manipulation représente une confiance pour la présence d'une manipulation d'image, dans laquelle plus la différence est grande, plus la confiance pour une manipulation d'image est élevée,
un dispositif de génération d'image (105), qui est configuré, si aucune manipulation d'image n'est détectée dans la première image faciale de référence numérique, pour générer une seconde image faciale de référence numérique de la personne sur la base de la première image faciale de référence numérique de la personne, la seconde image faciale de référence numérique de la personne ayant une seconde résolution d'image de référence ; et
un dispositif de personnalisation (107), qui est configuré pour stocker la deuxième image faciale de référence numérique de la personne dans le document d'identité de la personne afin de personnaliser le document d'identité de la personne,
dans lequel la première résolution d'image de référence est supérieure à la seconde résolution d'image de référence,
dans lequel le dispositif de génération d'image (105) est configuré pour convertir la première image faciale de référence numérique ayant la première résolution d'image de référence en la seconde image faciale de référence numérique ayant la seconde résolution d'image de référence.

2. Dispositif (100) selon la revendication 1, dans lequel le dispositif de capture d'image (101) comprend une interface de communication, qui est configurée pour recevoir une référence à la première image faciale de référence numérique de la personne et pour récupérer la première image faciale de référence numérique de la personne à l'aide de la référence afin de capturer la première image faciale de référence numérique de la personne.

3. Dispositif (100) selon la revendication 1, dans lequel le dispositif de capture d'image (101) comprend un scanner d'image, le scanner d'image étant configuré pour numériser optiquement une empreinte photographique d'un visage de la personne afin de capturer la première image faciale de référence numérique de la personne.

4. Dispositif (100) selon l'une des revendications précédentes, comprenant :
un capteur d'image, qui est configuré pour capturer une image faciale numérique de la personne ;
dans lequel le dispositif de détection de manipulation (103) est configuré pour détecter la caractéristique de référence de comparaison biométrique dans l'image faciale numérique de la personne.

5. Dispositif (100) selon la revendication 4, dans lequel le dispositif de détection de manipulation (103) est en outre configuré pour détecter une autre caractéristique de référence biométrique dans la première image faciale de référence numérique de la personne, pour détecter une autre caractéristique de référence de comparaison biométrique dans l'image faciale numérique de la personne, pour comparer l'autre caractéristique de référence biométrique avec l'autre caractéristique de référence de comparaison biométrique afin d'obtenir un autre indicateur de manipulation, et pour détecter la manipulation d'image dans la première image faciale de référence numérique en fonction de l'autre indicateur de manipulation.

6. Dispositif (100) selon l'une des revendications 4 ou 5, dans lequel le dispositif de détection de manipulation (103) est en outre configuré pour transformer la première image faciale numérique de référence en un espace de transformation, en particulier un espace de fréquence, afin d'obtenir une première image faciale numérique de référence transformée, pour transformer l'image faciale numérique dans l'espace de transformation, en particulier l'espace de fréquence, afin d'obtenir une image faciale numérique transformée, pour comparer la première image faciale numérique de référence transformée avec l'image faciale numérique transformée afin d'obtenir un autre indicateur de manipulation, et pour détecter la manipulation d'image dans la première image faciale numérique de référence en outre sur la base de l'autre indicateur de manipulation.

7. Dispositif (100) selon l'une des revendications 4 à 6, dans lequel le dispositif de détection de manipulation (103) est en outre configuré pour détecter une caractéristique d'image de référence dans la première image faciale de référence numérique, détecter une caractéristique d'image dans l'image faciale numérique, déterminer une différence entre une position de référence de la caractéristique d'image de référence dans la première image faciale de référence numérique et une position de la caractéristique d'image dans l'image faciale numérique pour obtenir un autre indicateur de manipulation, et détecter la manipulation d'image dans la première image faciale de référence numérique en fonction de l'autre indicateur de manipulation.

8. Dispositif (100) selon la revendication 7, dans lequel la caractéristique d'image est l'une des caractéristiques d'image suivantes : un coin dans l'image faciale numérique, ou un bord dans l'image faciale numérique.

9. Dispositif (100) selon l'une des revendications 4 à 8, dans lequel le dispositif de détection de manipulation (103) est en outre configuré pour effectuer une manipulation d'image à l'aide de la première image faciale de référence numérique et de l'image faciale numérique afin d'obtenir une image faciale de référence numérique manipulée, pour comparer la première image faciale de référence numérique avec l'image faciale de référence numérique manipulée afin d'obtenir un autre indicateur de manipulation, et pour détecter la manipulation d'image dans la première image faciale de référence numérique en fonction de l'autre indicateur de manipulation.

10. Dispositif (100) selon l'une des revendications 5 à 9, dans lequel le dispositif de détection de manipulation (103) est en outre configuré pour déterminer une différence entre l'indicateur de manipulation et une valeur de référence de manipulation prédéterminée afin d'obtenir une valeur de différence, pour déterminer une différence entre un autre indicateur de manipulation et une autre valeur de référence de manipulation prédéterminée afin d'obtenir une autre valeur de différence, pour déterminer une somme de la valeur de différence et de l'autre valeur de différence afin d'obtenir une valeur de somme, et pour détecter la manipulation d'image dans la première image faciale de référence numérique si la valeur de somme dépasse une valeur seuil de somme prédéterminée.

11. Dispositif (100) selon l'une des revendications 5 à 9, dans lequel le dispositif de détection de manipulation (103) est en outre configuré pour détecter la manipulation d'image dans la première image faciale numérique de référence à l'aide d'un réseau neuronal, dans lequel le réseau neuronal comporte une couche d'entrée avec une entrée et une autre entrée, dans lequel le réseau neuronal comporte une couche de sortie avec une sortie, dans lequel l'indicateur de manipulation est associé à l'entrée, dans lequel l'autre indicateur de manipulation est associé à l'autre entrée, et dans lequel la sortie indique la manipulation d'image dans la première image faciale numérique de référence.

12. Procédé (200) de personnalisation d'un document d'identité d'une personne, comprenant :
capturer (201) une première image faciale de référence numérique de la personne par un dispositif de capture d'image (101), la première image faciale de référence numérique de la personne ayant une première résolution d'image de référence ;
détecter (203) une caractéristique de référence biométrique dans la première image faciale de référence numérique de la personne par un dispositif de détection de manipulation (103) ;
comparer (205) la caractéristique de référence biométrique avec une caractéristique de référence de comparaison biométrique par le dispositif de détection de manipulation (103) afin d'obtenir un indicateur de manipulation ;
où l'indicateur de manipulation représente une confiance pour la présence d'une manipulation d'image, dans laquelle plus la différence est grande, plus la confiance pour une manipulation d'image est élevée,
détecter (207) une manipulation d'image dans la première image faciale de référence numérique sur la base de l'indicateur de manipulation par le dispositif de détection de manipulation (103) ;
si aucune manipulation d'image n'est détectée dans la première image faciale de référence numérique, générer (209) une seconde image faciale de référence numérique de la personne sur la base de la première image faciale de référence numérique de la personne par un dispositif de génération d'images (105), la seconde image faciale de référence numérique de la personne ayant une seconde résolution d'image de référence ; et
mémoriser (211) la deuxième image faciale numérique de référence de la personne dans le document d'identité de la personne par un dispositif de personnalisation (107) afin de personnaliser le document d'identité de la personne,
dans lequel la première résolution d'image de référence est supérieure à la seconde résolution d'image de référence,
dans lequel la première image faciale de référence numérique ayant la première résolution d'image de référence est convertie en la seconde image faciale de référence numérique ayant la seconde résolution d'image de référence.

13. Programme informatique comprenant un code de programme pour mettre en œuvre le procédé (200) selon la revendication 12, lorsque le code de programme est exécuté par un dispositif (100).
